# EUROPEAN PATENT APPLICATION

(11) **EP 3 199 232 A1**
(43) Date of publication of application: **02.08.2017**
(21) Application number: 15843945.5
(22) Date of filing: 08.07.2015
(51) Int. Cl.: B01J 13/02, B01J 23/00, B01J 37/16

(54) **HOLLOW METAL NANOPARTICLE, CATALYST INCLUDING SAME, AND METHOD FOR MANUFACTURING HOLLOW METAL NANOPARTICLE**

(30) Priority: 24.09.2014 KR 20140127943
(71) Applicant: LG Chem, Ltd., Seoul 150-721 (KR)
(72) Inventor: BANG, Jungup, Daejeon 305-738 (KR); HWANG, Gyo Hyun, Daejeon 305-738 (KR); CHO, Jun Yeon, Daejeon 305-738 (KR); KIM, Sang Hoon, Daejeon 305-738 (KR); KIM, Kwanghyun, Daejeon 305-738 (KR); CHOI, Ran, Daejeon 305-738 (KR)
(74) Representative: Hoffmann Eitle
(86) International application number: PCT/KR2015/007096
(87) International publication number: WO 2016/047906

(57) **Abstract**

The present specification relates to hollow metal nanoparticles, a catalyst including the same, and a method for manufacturing hollow metal nanoparticles.

## Description

### [Technical Field]

The present specification claims priority to and the benefits of Korean Patent Application No. 10-2014-0127943 filed with the Korean Intellectual Property Office on September 24, 2014, the entire contents of which are incorporated herein by reference.

The present specification relates to hollow metal nanoparticles, a catalyst including the same and a method for manufacturing hollow metal nanoparticles.

### [Background Art]

Nano Nanoparticles are particles having nanoscale particle sizes, and show optical, electrical and magnetic properties completely different from materials in a bulk state due to a quantum confinement effect, and a large specific surface area, in which energy required for electron transfer varies depending on the material sizes. Accordingly, due to such properties, much interest has been concentrated on their applicability in a catalytic field, an electromagnetic field, an optical field, a medical field and the like. Nanoparticles may be considered as an intermediate between bulks and molecules, and may be synthesized in terms of two directions of approaches, that is, a "top-down" approach and a "bottom-up" approach.

Examples of a method for synthesizing metal nanoparticles include a method reducing metal ions in a solution using a reducing agent, a method using gamma rays, an electrochemical method and the like. However, existing methods have problems in that it is difficult to synthesize nanoparticles having uniform size and shape, or the use of organic solvents leads to environmental pollution, high costs, and the like. For these various reasons, it has been difficult to economically mass-produce high-quality nanoparticles. Accordingly, development for mass producing uniform-sized high-quality nanoparticles has been required.

### [Disclosure]

### [Technical Problem]

The present specification is directed to providing hollow metal nanoparticles, a catalyst including the same, and a method for manufacturing hollow metal nanoparticles.

### [Technical Solution]

One embodiment of the present specification provides a method for manufacturing hollow metal nanoparticles including 1) preparing a composition including two or more types of metal salts, one or more types of ionic surfactants, a surface stabilizer and a solvent under air atmosphere; and 2) adding a reducing agent to the composition under air atmosphere.

Another embodiment of the present specification provides hollow metal nanoparticles manufactured using the manufacturing method.

Still another embodiment of the present specification provides hollow metal nanoparticles including a hollow core portion; a shell portion including a first metal and a second metal; and a cavity formed from an outer surface of the shell portion to the hollow core, wherein a ratio of the first metal content and the second metal content in the shell portion is greater than or equal to 1:3 and less than or equal to 1:20.

Yet another embodiment of the present specification provides a catalyst including hollow metal nanoparticles.

### [Advantageous Effects]

According to a method for manufacturing hollow metal nanoparticles of one embodiment of the present specification, a hollow core portion can be readily and quickly formed.

According to a method for manufacturing hollow metal nanoparticles of one embodiment of the present specification, bowl-type metal nanoparticles having a large cavity can be readily and quickly formed among hollow metal nanoparticles.

Hollow metal nanoparticles of one embodiment of the present specification have an advantage of having a large specific surface area.

A method for manufacturing hollow metal nanoparticles of one embodiment of the present specification has an advantage in that the method is not limited by metal reduction potential.

A method for manufacturing hollow metal nanoparticles of one embodiment of the present specification has an advantage of having a simple process.

### [Description of Drawings]

FIGS. 1 and 2 are pictures of TEM measurements of Example 1.
FIGS. 3 and 4 are pictures of TEM measurements of Comparative Example 1.
FIG. 5 is a graph showing an XRD measurement result of Example 1.
FIG. 6 is a graph showing an XRD measurement result of Comparative Example 1.

### [Mode for Disclosure]

Hereinafter, the present disclosure will be described in detail.

The present specification provides a method for manufacturing hollow metal nanoparticles including 1) preparing a composition including two or more types of metal salts, one or more types of ionic surfactants, a surface stabilizer and a solvent under air atmosphere; and 2) adding a reducing agent to the composition under air atmosphere. This has an advantage in that metal nanoparticles having bowl and porous forms may be synthesized in high yields in a short time.

In the present specification, air atmosphere means a state being exposed to colorless transparent mixed gas forming a lower layer of atmosphere surrounding the earth. Air includes oxygen, nitrogen and the like, and as for the air to which reactants and products are exposed during the process for manufacturing the hollow metal nanoparticles of the present specification, the content of oxygen may be at least 5vol% or greater in the content of the whole air.

The step 1) may include preparing a composition by adding two or more types of metal salts, one or more types of ionic surfactants and a surface stabilizer to a solvent; and, through stirring the composition, forming core-shell nanoparticles by the one or more types of ionic surfactants forming a core in the solvent, and metal ions of the metal salts forming a shell on the core surface.

The core formed by the one or more types of ionic surfactants may be a micelle formed with the surfactants. The micelle may have a colloidal property by the ionic surfactant being aggregated by van der Waals' force and the like in a solution and making a thermodynamically stable aggregate, and this aggregate is referred to as a micelle. The micelle may have a form of a spherical micelle, a stick-shaped micelle, a plate-shaped micelle, a layer micelle and the like, and the micelle preferably has a shape of a spherical micelle.

Generally, in an acid-base reaction, a salt is a product made through a reaction of an anion made by a hydrogen ion leaving from an acid and a cation made by a hydroxyl group leaving from a base. In other words, a salt is a compound made by an anion of an acid and a cation of a base.

In the present specification, the metal salt means a salt including a metal ion, and the metal salt may be dissociated into a metal ion including a metal in a solvent. Herein, the metal ion may be a cation or an anion.

In the present specification, the core formed by the one or more types of ionic surfactants may be a spherical micelle formed with the surfactants in which polar groups of the ionic surfactants are disposed on the surface, and hydrophobic groups of the ionic surfactant are disposed inside.

As for the metal ion of the metal salt forming a shell on the core surface, metal ions having affinity for ionic properties of the polar group of the ionic surfactant disposed on the surface of the core may be disposed closer to the core, and metal ions having repulsive force for ionic properties of the polar group of the ionic surfactant disposed on the surface may be disposed away from the core.

The metal salt may include two or more types of metal salts, and specifically, may include a first metal salt and a second metal salt.

When the metal salt includes a first metal salt and a second metal salt, the metal ion may include a first metal ion or an atomic group ion including a first metal ion dissociated from the first metal salt; and a second metal ion or an atomic group ion including a second metal ion dissociated from the second metal salt.

The first metal ion or the atomic group ion including the first metal ion, and the second metal ion or the atomic group ion including the second metal ion may have charges opposite to each other.

The forming of core-shell nanoparticles may include one or more types of ionic surfactants forming a core; the first metal ion or the atomic group ion including the first metal ion having a charge opposite to the charge of polar groups of the one or more types of ionic surfactants forming a first shell on the core surface; and the second metal ion or the atomic group ion including the second metal ion having the same charge as polar groups of the one or more types of ionic surfactants forming a second shell on the first shell.

The first shell may be a shell in which an amount of the first metal ion or the atomic group ion including the first metal ion having a charge opposite to the charge of polar groups of the ionic surfactants is higher than an amount of the second metal ion or the atomic group ion including the second metal ion. In addition, the second shell may be a shell in which an amount of the second metal ion or the atomic group ion including the second metal ion having the same charge as polar groups of the ionic surfactants is higher than an amount of the first metal ion or the atomic group ion including the first metal ion.

The step 2) may include adding a reducing agent to the composition; and forming hollow metal nanoparticles by the reducing agent reducing the metal ions of the shell to metals and the ionic surfactant melting and coming out of core-shell nanoparticles.

The method for manufacturing hollow metal nanoparticles may include preparing a composition by adding two or more types of metal salts, one or more types of ionic surfactants and a surface stabilizer to a solvent; the one or more types of ionic surfactants forming a core in the solvent by stirring the composition; the first metal ion or the atomic group ion including the first metal ion having a charge opposite to the charge of polar groups of the ionic surfactants forming a first shell on the core surface; the second metal ion or the atomic group ion including the second metal ion having the same charge as polar groups of the ionic surfactants forming a second shell on the first shell; adding a reducing agent to the composition; and forming hollow metal nanoparticles by the reducing agent reducing the first metal ion and the second metal ion to a first metal and a second metal, respectively, and the ionic surfactant and the first metal melting and coming out of core-shell nanoparticles.

When the surfactant melts and comes out to form a hollow, the first metal comes out therewith, and in the shell portion of the manufactured hollow metal nanoparticles, the amount of the first metal is relatively small. As shown in the following reaction formula, this is due to the fact, under the presence of oxygen, the first metal quickly melts and comes out with the help of the surfactant and the surface stabilizer. Surfactants and surface stabilizers largely affect melting and coming out of metals depending on the types and the amounts thereof, and through an oxidative etching process including oxygen, metal nanoparticles having hollow and bowl shapes are quickly formed in a high yield.

Ni⁰-2e⁻<->Ni²⁺

1/2 O₂+H₂O+2e⁻<->2OH⁻

Ni²⁺+lauryl sulfate (surfactant)<->Ni complexes

The stirring time in the step 2) may be 1 hour or less. Specifically, the stirring time of the composition after adding a reducing agent to the composition may be 1 hour or less. This has an advantage in that large quantities of nanoparticles are capable of being synthesized in a short time in a batch reactor.

The metal salt is not particularly limited as long as it is capable of being ionized in a solution and providing a metal ion. The metal salt may provide a cation including a metal ion or an anion of an atomic group ion including a metal ion by being ionized in a solution state.

The first metal salt and the second metal salt may each independently include ions of metals selected from the group consisting of metals belonging to the groups 3 to 15 of the periodic table, metalloids, lanthanum group metals and actinium group metals.

For example, the first metal salt and the second metal salt may each independently include ions of metals selected from the group consisting of platinum (Pt); ruthenium (Ru); rhodium (Rh); molybdenum (Mo); osmium (Os); iridium (Ir); rhenium (Re); palladium (Pd); vanadium (V); tungsten (W); cobalt (Co); iron (Fe); selenium (Se); nickel (Ni); bismuth (Bi); tin (Sn); chromium (Cr); titanium (Ti); gold (Au); cerium (Ce); silver (Ag); and copper (Cu).

The metal salt may include a first metal salt and a second metal salt, and the first metal salt and the second metal salt may include metal ions that are different from each other. Specifically, the first metal salt may provide a cation including a metal ion, and the second metal salt may provide an anion of an atomic group ion including a metal ion.

According to one embodiment of the present specification, the first metal may be selected from the group consisting of ruthenium (Ru), rhodium (Rh), molybdenum (Mo), osmium (Os), iridium (Ir), rhenium (Re), palladium (Pd), vanadium (V), tungsten (W), cobalt (Co), iron (Fe), selenium (Se), nickel (Ni), bismuth (Bi), tin (Sn), chromium (Cr), titanium (Ti), cerium (Ce), silver (Ag) and copper (Cu), and more specifically, may be nickel (Ni). In this case, the second metal may be selected from the group consisting of platinum (Pt), silver (Ag), palladium (Pd) and gold (Au), and more specifically, may be platinum (Pt).

According to another embodiment of the present specification, the first metal may be selected from the group consisting of platinum (Pt), silver (Ag), palladium (Pd) and gold (Au), and more specifically, may be platinum (Pt). In this case, the second metal may be selected from the group consisting of ruthenium (Ru), rhodium (Rh), molybdenum (Mo), osmium (Os), iridium (Ir), rhenium (Re), palladium (Pd), vanadium (V), tungsten (W), cobalt (Co), iron (Fe), selenium (Se), nickel (Ni), bismuth (Bi), tin (Sn), chromium (Cr), titanium (Ti), cerium (Ce), silver (Ag) and copper (Cu), and more specifically, may be nickel (Ni).

At least one of the first metal salt and the second metal salt may include a nickel ion.

At least one of the first metal salt and the second metal salt may include a platinum ion.

In the present specification, the first metal salt may include a nickel ion.

In the present specification, the second metal salt may include a platinum ion.

In the present specification, the first metal salt may include a nickel ion, and the second metal salt may include a platinum ion. Specifically, the first metal salt may provide a cation of Ni²⁺, and the second metal salt may provide an anion of PtCl₄²⁻.

The one or more types of ionic surfactants are not particularly limited as long as they are ionic in a solvent, and may include at least one of cation surfactants, anion surfactants, amphoteric surfactants and zwitterionic surfactants. The zwitterionic surfactant contains both positive and negative charges. When the positive and the negative charges of the surfactant of the present specification are pH dependent, the surfactant may be an amphoteric surfactant, and this may be zwitterionic in a certain pH range.

Specifically, the one or more types of ionic surfactants may include at least one of cation surfactants and anion surfactants. The anionic surfactant may mean a polar group of the surfactant having a negative charge, and the cationic surfactant may mean a polar group of the surfactant having a positive charge.

The anionic surfactant is not particularly limited as long as a polar group of the surfactant has a negative charge, and for example, may be selected from the group consisting of ammonium lauryl sulfate, sodium 1-heptanesulfonate, sodium hexanesulfonate, sodium dodecyl sulfate, triethanolammonium dodecyl benzenesulfate, potassium laurate, triethanolamine stearate, lithium dodecyl sulfate, sodium lauryl sulfate, alkyl polyoxyethylene sulfate, sodium alginate, dioctyl sodium sulfosuccinate, phosphatidyl glycerol, phosphatidyl inositol, phosphatidylserine, phosphatidic acid and salts thereof, glyceryl ester, sodium carboxymethylcellulose, bile acid and salts thereof, cholic acid, deoxycholic acid, glycocholic acid, taurocholic acid, glycodeoxycholic acid, alkyl sulfonate, aryl sulfonate, alkyl phosphate, alkyl phosphonate, stearic acid and salts thereof, calcium stearate, phosphate, sodium carboxymethyl cellulose, dioctyl sulfosuccinate, dialkyl ester of sodium sulfosuccinic acid, phospholipid and calcium carboxymethyl cellulose. However, the anionic surfactant is not limited thereto.

The cationic surfactant is not particularly limited as long as a polar group of the surfactant has a positive charge, and for example, may be selected from the group consisting of quaternary ammonium compounds, benzalkonium chloride, cetyl trimethylammonium bromide, chitosan, lauryl dimethyl benzylammonium chloride, acyl carnitine hydrochloride, alkyl pyridinium halide, cetylpyridinium chloride, cationic lipids, polymethyl methacrylate trimethylammonium bromide, sulfonium compounds, polyvinylpyrrolidone-2-dimethylaminoethyl methacrylate dimethyl sulfate, hexadecyl trimethylammonium bromide, phosphonium compounds, benzyl-di(2-chloroethyl)ethylammonium bromide, coconut trimethylammonium chloride, coconut trimethylammonium bromide, coconut methyl dihydroxyethylammonium chloride, coconut methyl dihydroxyethylammonium bromide, decyl triethylammonium chloride, decyl dimethyl hydroxyethylammonium chloride bromide, (C₁₂₋C ₁₅) dimethyl hydroxyethylammonium chloride, (C₁₂-C₁₅) dimethyl hydroxyethylammonium chloride bromide, coconut dimethyl hydroxyethylammonium chloride, coconut dimethyl hydroxyethylammonium bromide, myristyl trimethylammonium methyl sulfate, lauryl dimethyl benzylammonium chloride, lauryl dimethyl benzylammonium bromide, lauryl dimethyl (ethenoxy)₄ ammonium chloride, lauryl dimethyl (ethenoxy)₄ ammonium bromide, N-alkyl (C₁₂₋C₁₈) dimethylbenzylammonium chloride, N-alkyl (C₁₄₋C₁₈) dimethyl-benzylammonium chloride, N-tetradecyl dimethylbenzylammonium chloride monohydrate, dimethyl didecylammonium chloride, N-alkyl (C₁₂₋C₁₄) dimethyl 1-napthylmethylammonium chloride, trimethylammonium halide alkyltrimethylammonium salts, dialkyl-dimethylammonium salts, lauryl trimethylammonium chloride, ethoxylated alkyamidoalkyldialkylammonium salts, ethoxylated trialkylammonium salts, dialkylbenzene dialkylammonium chloride, N-didecyldimethylammonium chloride, N-tetradecyldimethylbenzylammonium chloride monohydrate, N-alkyl (C₁₂₋C₁₄) dimethyl 1-naphthylmethylammonium chloride, dodecyldimethylbenzylammonium chloride, dialkyl benzenealkylammonium chloride, lauryl trimethylammonium chloride, alkylbenzyl methylammonium chloride, alkyl benzyl dimethylammonium bromide, C₁₂ trimethylammonium bromide, C₁₅ trimethylammonium bromide, C₁₇ trimethylammonium bromide, dodecylbenzyl triethylammonium chloride, polydiallyldimethylammonium chloride, dimethylammonium chloride, alkyldimethylammonium halogenides, tricetyl methylammonium chloride, decyltrimethylammonium bromide, dodecyltriethylammonium bromide, tetradecyltrimethylammonium bromide, methyl trioctylammonium chloride, POLYQUAT 10, tetrabutylammonium bromide, benzyl trimethylammonium bromide, choline ester, benzalkonium chloride, stearalkonium chloride, cetyl pyridinium bromide, cetyl pyridinium chloride, halide salts of quaternized polyoxyethylalkylamine, "MIRAPOL" (polyquaternium-2), "Alkaquat" (alkyl dimethyl benzylammonium chloride, manufactured by Rhodia), alkyl pyridinium salts, amine, amine salts, imide azolinium salts, protonated quaternary acrylamide, methylated quaternary polymers, and cationic gua gum, benzalkonium chloride, dodecyl trimethylammonium bromide, triethanolamine and poloxamine. However, the cationic surfactant is not limited thereto.

The zwitterionic surfactant of the present specification may be selected from the group consisting of N-dodecyl-N,N-dimethyl-3-ammonio-1-propanesulfonate, betaine, alkyl betaine, alkylamido betaine, amido propyl betaine, coco ampho carboxy glycinate, sarcosinate aminopropionate, aminoglycinate, imidazolinium betaine, amphoteric imidazoline, N-alkyl-N,N-dimethylammonio-1-propanesulfonate, 3-cholamido-1-propyldimethylammonio-1-propanesulfonate, dodecylphosphocholine and sulfo-betaine. However, the zwitterionic surfactant is not limited thereto.

According to one embodiment of the present specification, a concentration of the one or more types of ionic surfactants may be greater than or equal to 1 time and less than or equal to 5 times of a critical micelle concentration for a solvent.

When the surfactants are free in the sense of not being present in an aggregated form, they are referred to as a monomer or unimer, and when increasing a unimer concentration, they aggregate to form a small entity of aggregates, that is, a micelle. Such a concentration may be referred to as a critical micelle concentration.

The critical micelle concentration in the present specification means a lower limit of a concentration at which the surfactant forms a group (micelle) of molecules or ions in a solution.

According to one embodiment of the present specification, sizes of the metal nanoparticles may be adjusted by controlling the one or more types of ionic surfactants forming a micelle and/or controlling the first and the second metal salts surrounding the micelle.

According to one embodiment of the present specification, sizes of the metal nanoparticles may be adjusted by a chain length of the ionic surfactant forming a micelle. Specifically, when a chain length of the ionic surfactant is short, a size of the micelle decreases, and accordingly, sizes of the metal nanoparticles may decrease.

According to one embodiment of the present specification, the number of carbon atoms of the chain of the ionic surfactant may be 15 or less. Specifically, the number of carbon atoms of the chain may be greater than or equal to 8 and less than or equal to 15. Alternatively, the number of carbon atoms of the chain may be greater than or equal to 10 and less than or equal to 12.

According to one embodiment of the present specification, sizes of the metal nanoparticles may be adjusted by controlling the type of a counter ion of the ionic surfactant forming a micelle. Specifically, as a size of the counter ion of the ionic surfactant increases, binding force with a polar group of the ionic surfactant becomes weak causing an increase in the size of the micelle, and consequently, sizes of the metal nanoparticles may increase.

According to one embodiment of the present specification, when the ionic surfactant includes an anionic surfactant, the ionic surfactant may include NH⁴⁺, K⁺, Na⁺ or Li⁺ as a counter ion. Specifically, sizes of the metal nanoparticles may decrease in the order of the ionic surfactant including NH⁴⁺ as a counter ion, the ionic surfactant including K⁺ as a counter ion, the ionic surfactant including Na⁺ as a counter ion, and the ionic surfactant including Li⁺ as a counter ion.

According to one embodiment of the present specification, when the ionic surfactant includes a cationic surfactant, the ionic surfactant may include I⁻, Br⁻ or Cl⁻ as a counter ion. Specifically, sizes of the metal nanoparticles may decrease in the order of the ionic surfactant including I⁻ as a counter ion, the ionic surfactant including Br⁻ as a counter ion, and the ionic surfactant including Cl⁻ as a counter ion.

According to one embodiment of the present specification, sizes of the metal nanoparticles may be adjusted by adjusting a size of a polar group of the ionic surfactant forming a micelle. Furthermore, when a size of the polar group of the ionic surfactant formed on an outer surface of the micelle increases, repulsive force between the head portions of the ionic surfactant increases causing an increase in the size of the micelle, and consequently, sizes of the metal nanoparticles may increase.

The reducing agent is not particularly limited as long as it has reducing power capable of reducing dissolved metal ions to have them precipitated as metal particles while being a strong reducing agent having standard reduction of -0.23 V or less, and specifically, greater than or equal to -4 V and less than or equal to -0.23 V. When a weak reducing agent is used, the reaction rate is low and subsequent heating of the solution is required, which makes a continuous process difficult to obtain causing a problem in mass production. Particularly, when ethylene glycol, one type of a weak reducing agent, is used, a problem of low productivity occurs in a continuous process due to a decrease in the flow rate caused by high viscosity, however, by using the strong reducing agent of the present specification, the above-mentioned problem may be overcome.

For example, the reducing agent may include at least one of sodium borohydride (NaBH₄), hydrazine (NH₂NH₂), lithium aluminum hydride (LiAlH₄) and lithium triethylborohydride (LiBEt₃H).

The surface stabilizer may include at least one of disodium phosphate, dipotassium phosphate, disodium citrate, and trisodium citrate.

The method for manufacturing metal nanoparticles according to one embodiment of the present specification does not use reduction potential differences and thereby has an advantage in that reduction potential between a first metal ion and a second metal ion forming a shell is not considered. The manufacturing method of the present specification uses charges among metal ions, and therefore, is simpler than existing methods for preparing metal nanoparticles using reduction potential differences. Accordingly, the method for manufacturing metal nanoparticles of the present specification facilitates mass production, and may prepare metal nanoparticles at low costs. Furthermore, the method does not use reduction potential differences, and therefore, has an advantage in that various metal salts may be used since limitations in the metal salts to use are reduced compared to existing methods for manufacturing metal nanoparticle.

The present specification provides hollow metal nanoparticles manufactured using the above-mentioned manufacturing method.

The hollow metal nanoparticles may include a hollow core portion; a shell portion including a first metal and a second metal; and a cavity formed from an outer surface of the shell portion to the hollow core.

In the hollow metal nanoparticles, descriptions on the hollow core portion; the first metal, the second metal, the shell portion, the cavity and the like may use the descriptions provided above.

The hollow metal nanoparticles of the present specification may include a surfactant in the inner hollow, or may have the surfactant removed from the inner hollow.

In the present specification, the hollow means the core portion of the metal nanoparticles being empty. In addition, the hollow may have the same meaning as the hollow core. The hollow may include terms such as a hollow, a tunnel, a cavity, a hole, a void and a bowl.

A volume of the hollow core may be 80vol% or greater based on the total volume of the hollow metal nanoparticles. This has an advantage in increasing catalytic activity since both the outer and the inner surfaces of the metal nanoparticles may be readily used for the reaction, and the reaction area increases therefrom.

The shell portion includes a first metal and a second metal, and may include a cavity formed from an outer surface of the shell portion to the hollow core.

The hollow metal nanoparticles may include one cavity described above. According to one embodiment of the present specification, the cavity may mean empty space continued from one region of an outer side surface of the hollow metal nanoparticles. The cavity of the present specification may be formed in one channel form from an outer side surface of the shell portion to the hollow core in one, two or more regions in the shell portion. The tunnel form may be a straight line, a continuous form of a curve line or a straight line, and a continuous form mixing a curve line and a straight line.

According to one embodiment of the present specification, by the cavity, the hollow metal nanoparticles is capable of including an empty region connected to the center of the hollow nanoparticles in one or more surfaces on the outer side.

According to one embodiment of the present specification, the bowl-type particles may have a semi-spherical-shaped structure formed by the particle including a cavity and a tunnel being split.

The cavity of the present specification may serve to utilize an inner surface area of the hollow metal nanoparticles. Specifically, the cavity may perform a role of increasing a surface area that may be brought into contact with reactants when the hollow metal nanoparticles are used as a catalyst and the like. Accordingly, the cavity may perform a role of allowing the hollow metal nanoparticles to exhibit high activity.

Specifically, by the hollow metal nanoparticles of the present specification including the cavity, the surface area may increase by 20% to 100% compared to hollow metal nanoparticles without a cavity.

According to one embodiment of the present specification, the shell portion may be a single layer. In this case, the shell portion of the single layer may include both the first metal and the second metal.

According to one embodiment of the present specification, when the shell portion is a single layer, the first metal and the second metal may be present in a mixed form. Furthermore, when the shell portion is a single layer, the first metal and the second metal may be uniformly or non-uniformly mixed.

In the shell portion, the first metal content may be lower than the second metal content. Herein, the first metal means a first metal ion or an atomic group ion including the first metal ion having a charge opposite to the charge of polar groups of the ionic surfactant being reduced when preparing the nanoparticles, and the second metal means a second metal ion or an atomic group ion including the second metal ion having the same charge as polar groups of the ionic surfactant being reduced.

The ratio of the first metal content and the second metal content in the shell portion may be greater than or equal to 1:3 and less than or equal to 1:20.

The first metal and the second metal may each independently include metals selected from the group consisting of metals belonging to the groups 3 to 15 of the periodic table, metalloids, lanthanum group metals and actinium group metals.

The first metal and the second metal may each independently include metals selected from the group consisting of platinum (Pt); ruthenium (Ru); rhodium (Rh) ; molybdenum (Mo); osmium (Os); iridium (Ir); rhenium (Re); palladium (Pd); vanadium (V); tungsten (W); cobalt (Co); iron (Fe); selenium (Se); nickel (Ni); bismuth (Bi); tin (Sn); chromium (Cr); titanium (Ti); gold (Au); cerium (Ce); silver (Ag); and copper (Cu).

The first metal and the second metal are different from each other, and the first metal or the second metal may be nickel.

The first metal and the second metal are different from each other, and the first metal or the second metal may be platinum.

In one embodiment of the present specification, the first metal may be nickel, and the second metal may be platinum.

The shell portion may have a thickness of greater than or equal to 1 nm and less than or equal to 3 nm. This has an advantage of increasing catalyst reactivity with a larger surface area compared to spherical nanoparticles.

The hollow metal nanoparticles may have an average diameter of greater than or equal to 4 nm and less than or equal to 30 nm. Forming hollow metal nanoparticles having an average particle diameter of less than 2 nm may be difficult, and the hollow metal nanoparticles having particle diameters of 30 nm has many advantages in that the nanoparticles are capable of being used in various fields. Specifically, the hollow metal nanoparticles more preferably have an average particle diameter of greater than or equal to 4 nm and less than or equal to 10 nm.

Particle diameters of the hollow metal nanoparticles may be in a range of 80% to 120% of an average diameter of the hollow metal nanoparticles.

An average diameter of the cavity may be greater than or equal to 30% and less than or equal to 90% of an average diameter of the hollow metal nanoparticles.

70% or higher of the manufactured metal nanoparticles are bowl-type and porous particles, and herein, the bowl-type particles are particles having a semi-spherical shape formed by particles including at least one of a cavity and a tunnel being split, and the porous particles are particles having one or more cavities and one or more tunnels.

The present specification provides hollow metal nanoparticles including a hollow core portion; a shell portion including a first metal and a second metal; and a cavity formed from an outer surface of the shell portion to the hollow core, wherein a ratio of the first metal content and the second metal content in the shell portion is greater than or equal to 1:3 and less than or equal to 1:20.

In the hollow metal nanoparticles, descriptions on the hollow core portion; the first metal, the second metal, the shell portion, the cavity and the like may use the descriptions provided above.

According to one embodiment of the present specification, the hollow metal nanoparticles may have a spherical shape. The spherical shape of the present specification not only means a perfect spherical shape, but also includes a roughly spherical shape. For example, the spherical-shaped outer surface may not be planar in the hollow metal nanoparticles, and in one hollow metal nanoparticle, the radius of curvature may not be constant.

The hollow metal nanoparticles of the present specification may be used replacing existing nanoparticles in the fields in which nanoparticles are generally used. The hollow metal nanoparticles of the present specification have larger specific surface areas compared to existing nanoparticles, and may exhibit more superior activity compared to existing nanoparticles. Specifically, the hollow metal nanoparticles of the present specification may be used in various fields such as catalysts, drug deliveries and gas sensors. As the catalyst, the hollow metal nanoparticles may also be used in cosmetics, pesticides, animal nutrients, or food supplements as an active material substance, and also in electronic products, optical elements, or polymers as a pigment.

The hollow metal nanoparticles may be used as a catalyst of a fuel cell. In this case, fuel cell efficiency may be significantly enhanced since outer and inner surfaces of the nanoparticles may all be used.

One embodiment of the present specification provides a catalyst including the hollow metal nanoparticles.

Hereinafter, the present specification will be described in more detail with reference to examples. However, the following examples are for illustrative purposes only, and not to limit the present specification.

### [Example]

### [Example 1]

After dissolving Ni(NO₃)₂, K₂PtCl₄, trisodium citrate and ammonium lauryl sulfate (ALS) in water under air, the result was stirred for 30 minutes. Herein, a molar ratio of the Ni precursor and the Pt precursor was 3:1, and the ALS was twice the critical micelle concentration (CMC). After the stirring of 30 minutes, NaBH₄, a reducing agent, was added thereto, and the result was reacted for 15 minutes or longer.

### [Comparative Example 1]

After dissolving Ni(NO₃)₂, K₂PtCl₄, trisodium citrate and ammonium lauryl sulfate (ALS) in water under nitrogen atmosphere, the result was stirred for 30 minutes. Herein, a molar ratio of the Ni precursor and the Pt precursor was 3:1, and the ALS was twice the critical micelle concentration (CMC).

After the stirring of 30 minutes, NaBH₄, a reducing agent, was added thereto, and the result was reacted for 15 minutes or longer.

### [Test Example 1]

### Transmission Electron Microscopy (TEM) Measurement

The particles of Example 1 and Comparative Example 1 were measured using a transmission electron microscopy (TEM, HITACHI H-7650) with a 100 KV acceleration voltage.

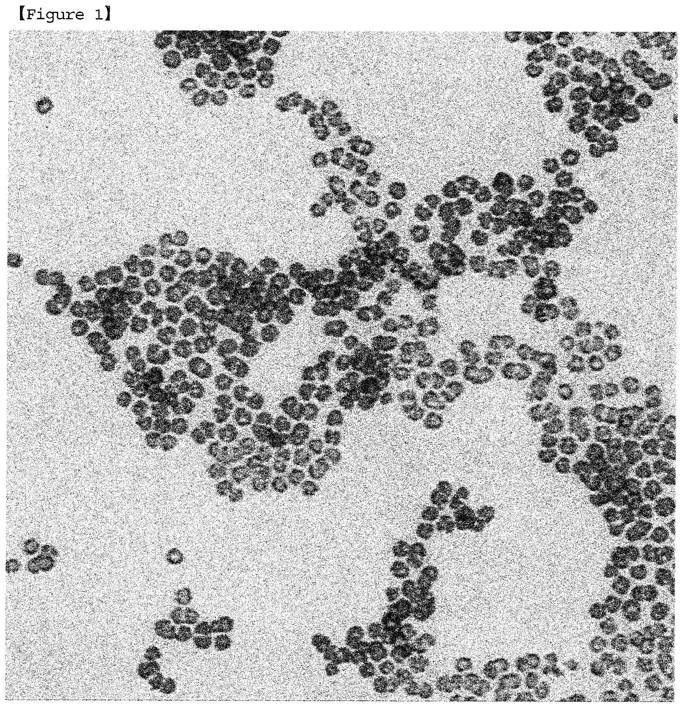

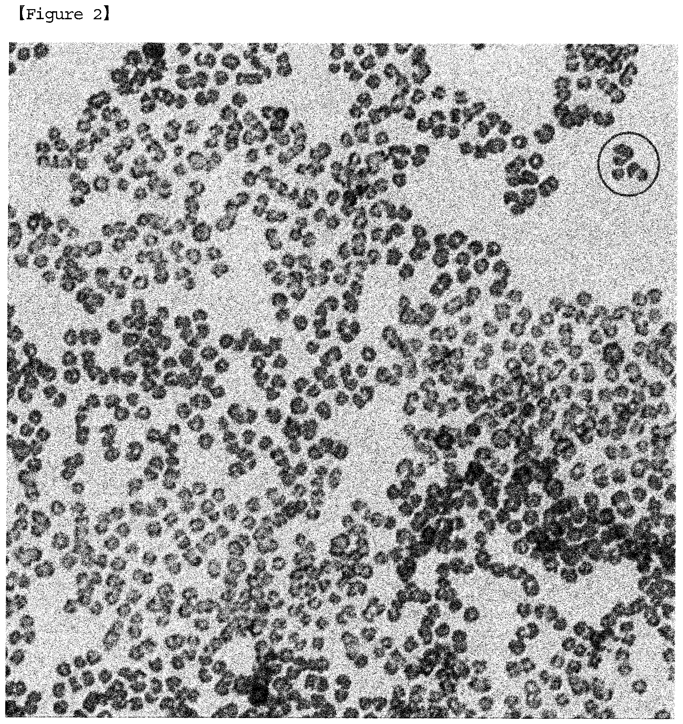

FIG. 1 and FIG. 2 are TEM pictures (X 40000) measured after reducing the metal nanoparticles under air, and then stirring the result for 1 hour or 4 hours, respectively. When examining the marked part in FIG. 2, it was observed that bowl-type particles having a semi-spherical shape were formed by particles including at least one of a cavity and a tunnel being split.

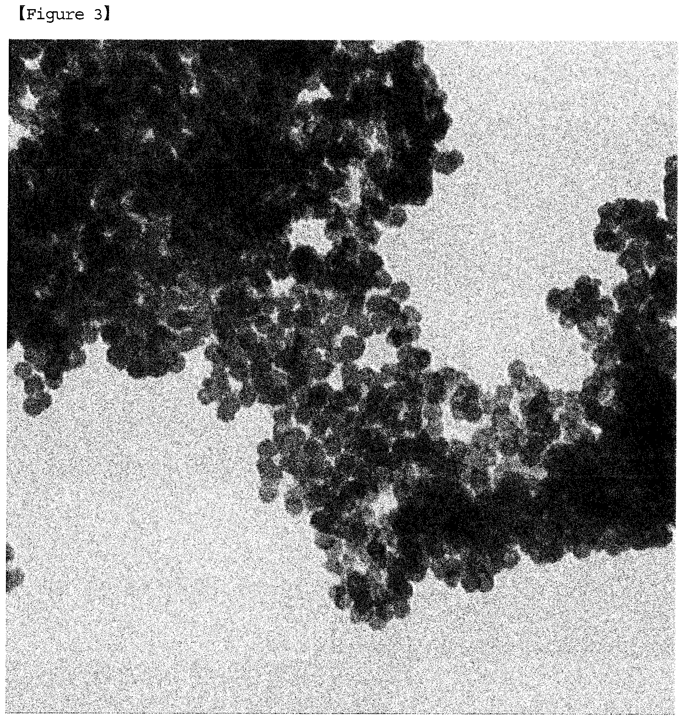

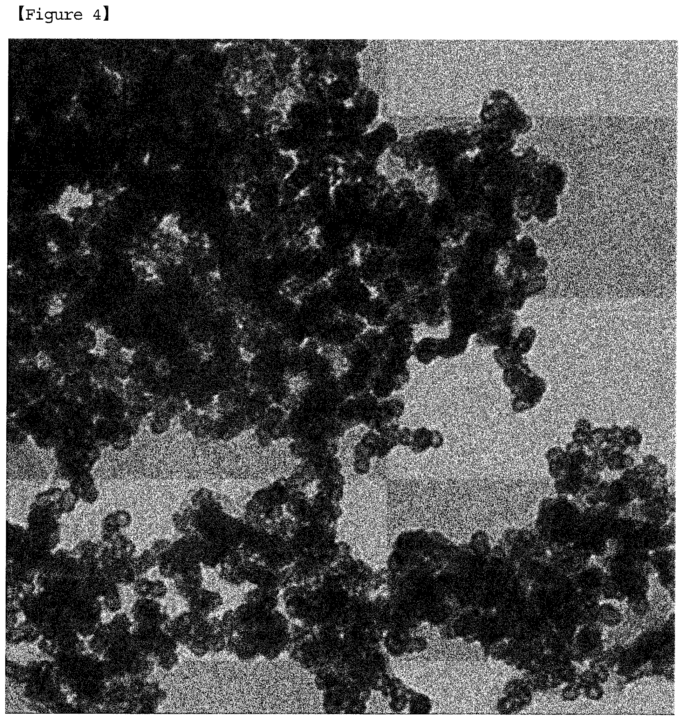

FIG. 3 and FIG. 4 are TEM pictures (X 40000) measured after reducing the metal nanoparticles under nitrogen atmosphere, and then stirring the result for 1 hour and 20 minutes, or 4 hours, respectively.

The particles of FIG. 4 are hollow particles, and it can be seen that the particles of FIG. 4 have smoother surfaces compared to the particles of FIG. 2. Herein, the hollow particle is a particle having a hollow core, and may have one cavity in a shell.

In Example 1 and Comparative Example 1, metal nanoparticles are synthesized changing only reaction atmosphere while fixing the amounts of the metal precursor, the reaction temperature, the surfactant, the surface stabilizer and the reducing agent, and TEM pictures thereof were measured. As can be identified from the TEM pictures, it was identified that the nanoparticles of Example 1 synthesized under air formed nanoparticles having a bowl shape and a hollow after one hour, and under nitrogen atmosphere, it was identified that nanoparticles including a hollow were formed after 4 hours.

Consequently, it is considered that nanoparticles are quickly formed when synthesized under air, and the yield of bowl-type particles readily using both the outer and the inner surfaces increases as well, which contributes to an activity increase as a catalyst requiring a large surface area.

### [Test Example 2]

### X-ray Diffraction Analysis

The crystal structures of the particles manufactured in Example 1 and Comparative Example 1 were analyzed using X-ray diffraction (XRD, Bruker D4 Endeavor Cu-Kα).

The 2θ value of the (111) peak of Pt particles appears at 39.8°, and in the case of an PtNi alloy, the 2θ value of the (111) peak of the PtNi alloy appears at 41.8°, which is an higher angle compared to the Pt, since Ni that is smaller compared to Pt is included therein leading to smaller lattice spacing. In a Pt_{0.7}Ni_{0.3} alloy, the 2θ value of the (111) peak appears between 39.8° and 41.8°.

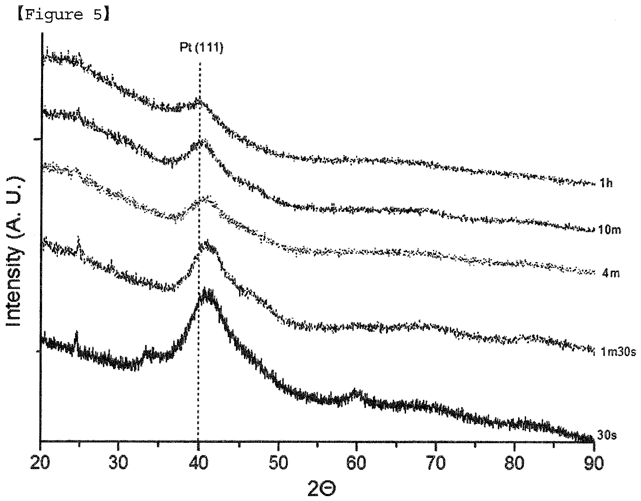

The XRD result of FIG. 5 shows changes in the XRD peaks depending on the stirring time of the nanoparticles synthesized in Example 1 after adding the reducing agent. As identified in FIG. 5, the maximum peak (peak max) near 41° gradually shifted to lower angles as the stirring time after adding the reducing agent increased, and this was due the fact that, in the PtNi alloy, the maximum peak (peak max) shifted to the Pt side with the Ni melting and coming out by oxidative etching.

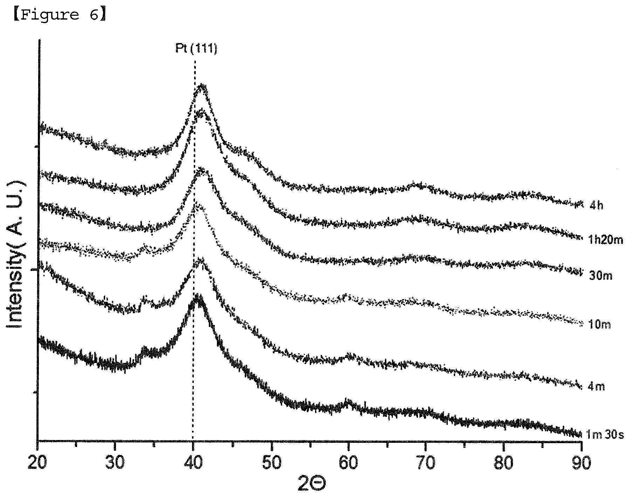

The XRD pattern of FIG. 6 shows changes in the XRD peaks depending on the stirring time of the nanoparticles synthesized in Comparative Example 1 after adding the reducing agent. Unlike FIG. 5, it was identified that the maximum peak (peak max) near 41° did not change much with time, and this was due to the fact that oxidative etching did not occur and the Ni did not melt and come out of the Pt₁₋ₓNiₓ alloy, which is different from the result of Example 1 in FIG. 5.

### [Test Example 3]

### EDS Analysis

The EDS analysis results showed that the nanoparticles of Example 1 had a composition of Pt_{0.9}Ni_{0.1}, and the particles of Comparative Example 1 had a composition of Pt_{0.7}Ni_{0.3}.

Accordingly, production of a hollow in the metal nanoparticles quickened by carrying out the reaction under air, and the yield of bowl-type and porous particles readily using both the outer and the inner surfaces increased, and through the XRD and the EDS data, it was identified that such phenomena were obtained by oxidative etching.

## Claims

1. A method for manufacturing hollow metal nanoparticles comprising:
1) preparing a composition including two or more types of metal salts, one or more types of ionic surfactants, a surface stabilizer and a solvent under air atmosphere; and
2) adding a reducing agent to the composition under air atmosphere.

2. The method for manufacturing hollow metal nanoparticles of Claim 1, wherein the step 1) includes,
preparing a composition by adding two or more types of metal salts, one or more types of ionic surfactants and a surface stabilizer to a solvent; and
forming core-shell nanoparticles by the one or more types of ionic surfactants forming a core in the solvent, and a metal ion of the metal salt forming a shell on the core surface, through stirring the composition.

3. The method for manufacturing hollow metal nanoparticles of Claim 2, wherein the metal salt includes a first metal salt and a second metal salt, and the metal ion includes a first metal ion or an atomic group ion including a first metal ion dissociated from the first metal salt; and a second metal ion or an atomic group ion including a second metal ion dissociated from the second metal salt.

4. The method for manufacturing hollow metal nanoparticles of Claim 3, wherein the first metal ion or the atomic group ion including the first metal ion, and the second metal ion or the atomic group ion including the second metal ion have charges opposite to each other.

5. The method for manufacturing hollow metal nanoparticles of Claim 4, wherein the forming of core-shell nanoparticles includes,
the one or more types of ionic surfactants forming a core;
the first metal ion or the atomic group ion including the first metal ion having a charge opposite to a charge of the ionic surfactant forming a first shell on the core surface; and
the second metal ion or the atomic group ion including the second metal ion having the same charge as the ionic surfactant forming a second shell on the first shell.

6. The method for manufacturing hollow metal nanoparticles of Claim 2 wherein the step 2) includes
adding a reducing agent to the composition; and
forming hollow metal nanoparticles by the reducing agent reducing metal ions of the shell to metals and the ionic surfactant melting and coming out of core-shell nanoparticles.

7. The method for manufacturing hollow metal nanoparticles of Claim 1, comprising:
preparing a composition by adding two or more types of metal salts, one or more types of ionic surfactants and a surface stabilizer to a solvent;
the one or more types of ionic surfactants forming a core in the solvent by stirring the composition;
a first metal ion or an atomic group ion including a first metal ion having a charge opposite to a charge of the ionic surfactant forming a first shell on a surface of the core;
a second metal ion or an atomic group ion including a second metal ion having the same charge as the ionic surfactant forming a second shell on the first shell;
adding a reducing agent to the composition; and
forming hollow metal nanoparticles by the reducing agent reducing the first metal ion and the second metal ion to a first metal and a second metal, respectively, and the one or more types of ionic surfactants and the first metal melting and coming out of core-shell nanoparticles.

8. The method for manufacturing hollow metal nanoparticles of Claim 1, wherein a stirring time of the step 2) is two hours or less.

9. The method for manufacturing hollow metal nanoparticles of Claim 1, wherein the metal salt includes a first metal salt and a second metal salt, and the first metal salt and the second metal salt include metal ions that are different from each other.

10. The method for manufacturing hollow metal nanoparticles of Claim 9, wherein the first metal salt and the second metal salt each independently include an ion of a metal selected from the group consisting of metals belonging to the groups 3 to 15 of the periodic table, metalloids, lanthanum group metals and actinium group metals.

11. The method for manufacturing hollow metal nanoparticles of Claim 9, wherein the first metal salt and the second metal salt each independently include an ion of a metal selected from the group consisting of platinum (Pt); ruthenium (Ru); rhodium (Rh); molybdenum (Mo); osmium (Os); iridium (Ir); rhenium (Re); palladium (Pd); vanadium (V); tungsten (W); cobalt (Co); iron (Fe); selenium (Se); nickel (Ni); bismuth (Bi); tin (Sn); chromium (Cr); titanium (Ti); gold (Au); cerium (Ce); silver (Ag); and copper (Cu).

12. The method for manufacturing hollow metal nanoparticles of Claim 9, wherein the first metal salt includes a nickel ion.

13. The method for manufacturing hollow metal nanoparticles of Claim 9, wherein the second metal salt includes a platinum ion.

14. The method for manufacturing hollow metal nanoparticles of Claim 1, wherein the one or more types of ionic surfactants include at least one of cation surfactants, anion surfactants, amphoteric surfactants and zwitterionic surfactants.

15. The method for manufacturing hollow metal nanoparticles of Claim 1, wherein the reducing agent includes at least one of sodium borohydride (NaBH₄), hydrazine (NH₂NH₂), lithium aluminum hydride (LiAlH₄) and lithium triethylborohydride (LiBEt₃H).

16. The method for manufacturing hollow metal nanoparticles of Claim 1, wherein the surface stabilizer includes at least one of disodium phosphate, dipotassium phosphate, disodium citrate, and trisodium citrate.

17. Hollow metal nanoparticles manufactured using the manufacturing method of any one of Claims 1 to 16.

18. The hollow metal nanoparticles of Claim 17 comprising:
a hollow core portion;
a shell portion including a first metal and a second metal; and
a cavity formed from an outer surface of the shell portion to the hollow core.

19. The hollow metal nanoparticles of Claim 18, wherein the first metal content is lower than the second metal content in the shell portion.

20. The hollow metal nanoparticles of Claim 18, wherein a ratio of the first metal content and the second metal content in the shell portion is 1:3 or more and 1:20 or less.

21. The hollow metal nanoparticles of Claim 17, which an average diameter of the hollow metal nanoparticles is 4 nm or more and 30 nm or less.

22. The hollow metal nanoparticles of Claim 18, wherein an average diameter of the cavity is 30% or more and 90% or less of an average diameter of the hollow metal nanoparticles.

23. The hollow metal nanoparticles of Claim 18, wherein a thickness of the shell portion is 1 nm or more and 3 nm or less.

24. The hollow metal nanoparticles of Claim 17, wherein particle diameters of the hollow metal nanoparticles are in a range of 80% to 120% of an average diameter of the hollow metal nanoparticles.

25. The hollow metal nanoparticles of Claim 18, wherein a volume of the hollow core is 80vol% or more based on a total volume of the hollow metal nanoparticles.

26. Hollow metal nanoparticles comprising:
a hollow core portion;
a shell portion including a first metal and a second metal; and
a cavity formed from an outer surface of the shell portion to the hollow core,
wherein a ratio of the first metal content and the second metal content in the shell portion is 1:3 or more and 1:20 or less.

27. The hollow metal nanoparticles of Claim 26, which an average diameter of the hollow metal nanoparticles is 4 nm or more and 30 nm or less.

28. The hollow metal nanoparticles of Claim 26, wherein an average diameter of the cavity is 30% or more and 90% or less of an average diameter of the hollow metal nanoparticles.

29. The hollow metal nanoparticles of Claim 26, wherein a thickness of the shell portion is 1 nm or more and 3 nm or less.

30. The hollow metal nanoparticles of Claim 26, wherein particle diameters of the hollow metal nanoparticles are in a range of 80% to 120% of an average diameter of the hollow metal nanoparticles.

31. The hollow metal nanoparticles of Claim 26, wherein a volume of the hollow core is 80vol% or more based on a total volume of the hollow metal nanoparticles.

32. The hollow metal nanoparticles of Claim 26, wherein the first metal and the second metal are each independently selected from the group consisting of metals belonging to the groups 3 to 15 of the periodic table, metalloids, lanthanum group metals and actinium group metals.

33. The hollow metal nanoparticles of Claim 26, wherein the first metal and the second metal are each independently selected from the group consisting of platinum (Pt); ruthenium (Ru); rhodium (Rh) ; molybdenum (Mo); osmium (Os); iridium (Ir); rhenium (Re); palladium (Pd); vanadium (V); tungsten (W); cobalt (Co); iron (Fe); selenium (Se); nickel (Ni); bismuth (Bi); tin (Sn); chromium (Cr); titanium (Ti); gold (Au) ; cerium (Ce); silver (Ag); and copper (Cu).

34. The hollow metal nanoparticles of Claim 26, wherein the first metal and the second metal are different from each other, and the first metal or the second metal is nickel.

35. The hollow metal nanoparticles of Claim 26, wherein the first metal and the second metal are different from each other, and the first metal or the second metal is platinum.

36. The hollow metal nanoparticles of Claim 26, wherein the first metal is nickel, and the second metal is platinum.

37. A catalyst comprising the hollow metal nanoparticles of any one of Claims 26 to 36.
